# EUROPEAN PATENT APPLICATION

(11) **EP 3 866 141 A1**
(43) Date of publication of application: **18.08.2021**
(21) Application number: 20156704.7
(22) Date of filing: 11.02.2020
(51) Int. Cl.: G09B 9/04, G09B 19/00

(54) **METHOD OF TEACHING HOW TO OPERATE ACCESSORIES OF A VEHICLE**

(71) Applicant: Shuman, Alan, Van Nuys, California 91411 (US)
(72) Inventor: Shuman, Alan, Van Nuys, California 91411 (US)
(74) Representative: Haseltine Lake Kempner LLP

(57) **Abstract**

A method of teaching by live one-on-one teacher to student on how to set up and operate hard to understand accessories which are in expensive vehicles where such accessories have only been developed within a few years preceding the sale of the vehicle. Both teacher and student who purchased the expensive vehicle are in the vehicle at the same time - one in the driver's seat and one in the passenger seat.

## Description

### BACKGROUND OF THE INVENTION

### 1. Field of the Invention

The present invention relates to the field of teaching. In particular, the present invention relates to teaching the use of very complicated operation of components of automobiles.

### 2. Description of the Prior Art

The following twelve patents and published patent applications are the closest prior art known to the inventor:
1. United States Published Patent Application No. 2010/0070932 to Christopher Hur on March 18, 2010 for "Vehicle On-Board Device" (hereafter the "Hur Published Patent Application");
2. United States Published Patent Application No. 2015/0030998 to Yimin Liu et al. on January 29, 2015 for "Method and Apparatus for Automated Vehicle Support" (hereafter the "Liu Published Patent Application");
3. United States Published Patent Application No. 2016/0103577 to Eric H. Greenberg et al. on April 14, 2016 for "Creating and Delivering a Vehicle Manual in the Form of an Interactive Wrapped Package of Cards" (hereafter the "Greenberg Published Patent Application");
4. United States Published Patent Application No. 2016/0127373 to Michelle Lynne Avary et al. on May 5, 2016 for "Automatic Connected Vehicle Demonstration Process" (hereafter the "Avary Published Patent Application");
5. United States Published Patent Application No. 2016/0371759 to Matthew D. Wilson et al. on December 22, 2016 for "Guided Unit-Specific Automobile Demonstration" (hereafter the "Wilson Published Patent Application");
6. United States Published Patent Application No. 2017/0061826 to Jinesh J. Jain et al. on March 2, 2017 for "In-Vehicle Tutorial" (hereafter the "Jain Published Patent Application");
7. United States Patent No. 9,852,625 issued to Trent Victor et al. on December 26, 2017 for "Method and System for Providing a Tutorial Message to a Driver of a Vehicle" (hereafter the "Victor Patent");
8. United States Published Patent Application No. 2017/0249856 to Evan Roger Fischer et al. on August 31, 2017 for "Vehicle Operator Training System" (hereafter the "Fischer Published Patent Application");
9. United States Patent No. 9,944,182 issued to Cheryl N. Platz et al. on April 17, 2018 for "Post-Drive Summary with Tutorial" (hereafter the "Platz Patent");
10. United States Published Patent Application No. 2018/0151088 to Adrian Tan et al. on May 31, 2018 for "Vehicle Tutorial System and Method for Sending Vehicle Tutorial to Tutorial Manager Device" (hereafter the "Tan Published Patent Application");
11. United States Published Patent Application No. 2018/0225896 to Laith Daman et al. on August 9, 2018 for "Li-Fi Instrument Panel, Virtualization, and Coaching" (hereafter the "Daman Published Patent Application");
12. United States Patent No. 8,862,318 issued to Charles A. Everhart et al. on October 14, 2014 for "METHOD FOR TEACHING AN AFTERMARKET ACCESSORY COMPONENT, AND AN AFTERMARKET ACCESSORY COMPONENT CONFIGURED TO LEARN" (hereafter the "Everhart Patent").

The Hur Published Patent Application discloses a vehicle on-board device comprising: a user interface device mounted inside of a vehicle, and configured and arranged to output information to a user and to receive a user input; and a processing section operatively coupled to the user interface device, and configured to perform a prescribed function in response to a prescribed user operation received by the user input interface device, the processing section being further configured to perform an interactive tutorial control to provide the user with at least one interactive instruction for the prescribed function in which the processing section prompts the user to input the prescribed user operation, determines whether the user input received by the user interface device matches the prescribed user operation, and completes the interactive learning control when the user input matches the prescribed user operation.

The Liu Published Patent Application discloses a system comprising: a processor configured to: detect the presence of a driver in a vehicle; determine a demonstration of a vehicle feature appropriate for the driver; offer demonstration of the vehicle feature; and upon acceptance of the offer, provide a demonstration of the vehicle feature.

The Greenberg Published Patent Application discloses a vehicle manual wrap package for a vehicle, embedded in a tangible computer readable storage medium, the vehicle manual wrap package including: (a) a vehicle card identifying the vehicle; (b) one or more informational card(s) for providing media content pertinent to the vehicle, including a user manual describing operation and features of the vehicle; and (c) an application function card, embedding or associating therewith, an application function for providing interaction between a representative of the vehicle manufacturer and an owner of the vehicle when consuming the wrap package, wherein the cards of the vehicle manual wrap package are further configured to be rendered in one or more sequences at runtime.

The Avary Published Patent Application discloses a system for use in an automotive sales network for registering one or more demonstration vehicles to a dealership via a secure vehicle registration network, comprising: an interactive interface engine providing an interactive interface for registering one or more vehicles as a demonstration vehicle, which is capable of receiving and transmitting messages, an authentication engine for receiving dealer information and vehicle information from one or more authorized databases and comparing predetermined dealer information and predetermined vehicle information obtained from one or more received messages with the one or more authorized databases, a registration engine for registering the one or more vehicles as a registered demonstration vehicle, a computer-based secure communication system capable of communications with the one or more authorized databases, the vehicle and dealer, and a reporting engine for generating one or more reports in response to data from one or more of the authentication engine and the registration engine.

The Wilson Published Patent Application discloses aspects of a computer-implemented system including one or more mobile computers, a server, and digital data storage accessible by the server. The storage includes records describing automobiles in an inventory, such as vehicle identification numbers (VINs) referenced to automobile site availability and specific features from a set of available automotive features. The mobile computer is programmed to perform machine-executable operations to present a guided, interactive, multimedia presentation of automotive features specific to a subject automobile. One implementation concerns a server and digital data storage containing one or more programs that, when installed and executed, enable a mobile computer to present a guided, interactive, multimedia presentation of automotive features specific to a subject automobile. Another implementation concerns a process of providing an interactive automobile specific presentation of automotive features. Various other implementations are also discussed.

The Jain Published Patent Application discloses methods, devices, and systems pertaining to in-vehicle tutorials are described. A method may involve receiving a request for an in-vehicle tutorial of an operational feature of a vehicle from a user and simulating expected driving behavior corresponding to the operational feature in the vehicle. The method may further include monitoring operational behavior of the user, comparing the operational behavior with the expected driving behavior, and providing a feedback to the user based on the comparison.

The Victor Patent discloses a method is provided for providing a tutorial message to a driver in a vehicle using an in-vehicle tutorial system including a multimodal user interface. The method includes assigning an area of improvement, including at least one tutorial task, to the tutorial system, identifying a driving context for which a tutorial task is to be performed, based on the tutorial task and the driving context, selecting a tutorial message encouraging a desired driving behavior, and providing the selected tutorial message to the driver using the multimodal user interface. The tutorial message may preferably be provided in the form of an audio, voice, visual, or haptic output, or combinations thereof, from the multimodal user interface of the tutorial system. A multi-modal interface should be understood as an interface capable of providing an output to the driver through at least two of the modes audio, voice, visual, or haptic output.

The Fischer Published Patent Application discloses a method of providing vehicle operator training in a vehicle including one or more feedback mechanisms, one or more sensors, and one or more actuators, the method comprising: based on first information from the one or more sensors, determining whether an environment of the vehicle is appropriate for a first training program; in response to determining the environment is appropriate for the first training program, invoking the first training program including a plurality of training steps; providing, via the one or more feedback mechanisms, feedback instructing an operator of the vehicle to carry out a first training step associated with the first training program; monitoring second information from the one or more sensors and the one or more actuators for a plurality of criteria associated with the first training step of the first training program; in accordance with the second information meeting a first criterion of the plurality of criteria, providing, via the one or more feedback mechanisms, feedback associated with the first criterion; and in accordance with the second information meeting a second criterion of the plurality of criteria, manipulating the one or more actuators to automatically maneuver the vehicle according to a response associated with the second criterion.

The Platz Patent discloses a method implemented at least in part by a processor of a vehicle, the method comprising: determining that the vehicle is in motion; while the vehicle is in motion, determining that one or more notifications are to be presented to a user of the vehicle; and based at least partially on determining both that the vehicle is in motion and that a second condition is present, performing at least one of: determining a manner in which to present at least one of the one or more notifications; and determining when to present at least one of the one or more notifications.

The Tan Published Patent Application discloses a vehicle tutorial system comprising: a data storage device having at least one vehicle tutorial stored therein; an on-board identification sensor for identifying a user of a vehicle; an on-board vehicle communication device configured to communicate with a tutorial manager device and at least one remote device; a tutorial manager device located in at least one of a cloud computer and the at least one remote device; and an on-board vehicle controller programmed to: select the at least one vehicle tutorial, identify the user of the vehicle based on information from the on-board identification sensor, select the at least one remote device associated with the user of the vehicle, offer the at least one vehicle tutorial to the user at a first time on at least one of an on-board vehicle display and the at least one remote device, and upon the user declining the offer at the first time, send the at least one vehicle tutorial to the tutorial manager device, the tutorial manager device including a processor programmed to offer the at least one vehicle tutorial to the user at a time later than the first time on the on-board vehicle display or on the at least one remote device.

The Daman Published Patent Application discloses a method of light fidelity ("Li-Fi") communication, comprising: determining an event associated with a vehicle; generating, based upon the determined event, a Li-Fi communication specific to a location within the vehicle, comprising information based on an operational characteristic of the vehicle; and sending, to a wireless device, the generated Li-Fi communication; wherein the wireless device generates, based upon the received Li-Fi communication and a selection on the wireless device by a user, additional information regarding the operational characteristic of the vehicle, and displays the additional information.

The Everhart Patent discloses a method for teaching an aftermarket accessory component to actuate a vehicle function, the aftermarket accessory component being configured to monitor communications across a vehicle bus, the method comprising: sampling, with the aftermarket accessory component, message traffic transmitted across the vehicle bus while the vehicle function is not actuated; setting filters in the aftermarket accessory component based on the sampled message traffic; prompting a user with the aftermarket accessory component to actuate the vehicle function in a first manner; collecting, with the aftermarket accessory component, filtered message traffic from the vehicle bus while the vehicle function is actuated in the first manner; and parsing, with the aftermarket accessory component, the filtered message traffic to identify a command associated with actuation of the vehicle function. This patent has now expired for failure to pay the maintenance fee.

None of the above patents or published patent applications discloses the method as described herein to improve teaching how to operate vehicle accessories.

There is a significant need for the implementation of an embodiment of the present invention which utilizes a live one-on-one teaching as disclosed in the following sections. To the best of the present inventor's knowledge, no one has conceived of the unique, novel and non-obvious invention as disclosed and claimed in this patent application.

### SUMMARY OF THE INVENTION

The present embodiment relates to the field of addressing the very complicated application of what used to be simple to operate features in automobiles. The automobile industry has evolved to the point where they have engaged in very high technology and very high tech implementation of what used to be simple operation in automobiles. In addition automobile manufacturers have developed the technology to a levels which are very complicated and very difficult to understand for any person. The present inventor who is knowledgeable in automobiles has found that even the simplest new automobiles are not easy to operate with respect to engaging the various new features that have been implemented in the automobiles. Even when reading an instruction manual or viewing a video provided by the automobile manufacturer, it is almost impossible to follow the steps required to implement even the simplest tasks as will be discussed below.

An embodiment proposes that buyers of new automobiles that have high tech features in them have a one-on-one hands on live teaching session from a teacher who is used to and understands how to teach the driving of an automobile and therefore, knows how to operate an automobile. The present embodiment includes training that teacher to operate all of the complicated high tech features that are presently implemented in automobiles and which are almost impossible to operate by simply reading an instruction manual or watching a video.

It has been discovered that a key feature of the innovation is to take a teacher from the automobile driving school, who is first of all a teacher and second a teacher of automobile driving to train that individual how to operate a highly complicated new instruments in the automobile which have been effectively technicized to the point where it is not a simple task to push a button or to move a switch but requires an understanding of many steps by using either a smart phone application which are provided with automobiles or basically following instruction manuals where many steps are required in order to facilitate an action.

It has been discovered by the present inventor that the use of automobile instruments have become so high tech that most of the individuals who purchase a high tech automobile features get frustrated, give up and do not use those features because it is simply too hard to understand how to operate the features as they require multiple steps from beginning to end before the feature can be implemented. Even the simplest features such as setting a clock or setting a rear view mirror which used to be a simple matter of adjustment, is now very involved and complicated requiring several steps even sometimes the use of a smart phone combined with other computerized instruments on the automobile in order or make the adjustment. Such steps are very time consuming and are not easy to understand and even though the automobile manufacturers attempt to provide much guidance through the use of instruction manuals and instruction videos and other non-live one-on-one teaching implements, it has been discovered that all of those teaching methods are not adequate to enable an individual on how to learn to operate the various instruments and features of a modern day car.

It has been discovered that the only way to implement the knowledge on how to operate the high tech features is to have a live one-on-one individual trained to operate the instruments and someone who is from a driving school who is knowledgeable to know how to drive cars and teach driving to have a one-on-one tutorials for every single feature of the automobile where the student is in the passenger seat and the teacher is in the driver seat showing how the specific feature is operated and all of the steps that are taken from beginning to end on how to operate it and thereafter trading places and having the student sit in the passenger seat and then duplicate what the teacher has taught the student so that it is clear that the student has learned how to operate the complicated feature. In the event that the students is not able to duplicate what the teacher has taught then once again they will reverse places and the teacher will once again go over the information to refresh the memory of the student to be sure the student then understands how to operate the complicated instrument. The student will then after go back to the driver seat to once again demonstrate that they now understand how to operate the complicated instrument.

With respect to the remainder of the application, what is discussed are some of the accessories that are incorporated into the automobile. Simpler model cars used to be easy to operate but are now so complicated due to the high technology implemented by the automobile manufacturers that it is simply not easy for anyone to understand or easy for anyone to operate. At a recent car show where there where car salesmen selling cars, as the present inventor discussed how to operate features with the car salesmen, what he learned was that most of the car salesman do not know how to operate most of the high tech features themselves. Therefore, there is a significant need for a clear way to teach individuals who purchase vehicles how to operate the high-end features which have become extremely difficult to operate due to the high tech implementation from the automobile manufacturers.

Today's automobiles are equipped with numerous features that can be complicated to set up and operate, even for the sophisticated car owner. These features include setting hands-free telecommunication devices such as Bluetooth®, adjusting seat positions, setting cruise control, setting internal clocks and other features on a control panel, adjusting camera settings, using self-park steering, and numerous other features depending upon the make and model of the car.

Another embodiment provides a novel method and apparatus to facilitate a live knowledgeable instructor providing an in-person one-on-one instruction to a student on how to operate complicated multi-function accessories in a vehicle. Specifically, the instructor is an individual who has obtained the requisite instruction and certification to be a licensed driving teacher and is authorized to educate students on how to drive a car. The instructor can be either a self-employed person or can be an employee of a licensed driving school. For purposes of the present invention, the student is any person, but in particular, is any busy individual who purchased or leased a high-end car but does not have the time or patience to read through voluminous instruction books providing instructions on how to set up and use the various accessories in a high-end vehicle.

When most people buy a high-end vehicle, the purchaser receives one or more instruction books which provide the buyer with voluminous detailed information on how to operate numerous accessories in the vehicle. In the case of high-end expensive vehicles, many of the accessories have been developed over the past few years. The newly developed accessories are far more complicated to set up and operate than conventional accessories such as gas, brake, gear shifting, windshield wipers, etc. which have been in use for decades.

Many newly developed accessories are very complicated and require reading an extensive instruction manual to figure out how to use the specific feature. By way of example, operation of the new driver's side vehicle seat including vibration, massaging sequences, motorized head-rest positioning, seat height, distance from the steering wheel, seat back orientation and tilting are complicated and the instructions are hard to understand. Examples of other newly implemented features include computerized automatic shifting from one lane to another and also an automatic device where the vehicle slows in heavy traffic and speeds up in light traffic through sensors in the vehicle. These sensors need to be operated by pushing a touchscreen or some other manual operation.

For the written or video instructions, such as setting up and operating the newly developed features, the problem is that each instruction manual is long, cumbersome, difficult to understand and time consuming. The purchaser of the high-end vehicle may try once or twice to set up the feature and then gives up and does not set up and use the high-end features. Therefore, the buyer spends a lot of money on a high-end vehicle with numerous high-end features which are never used.

There is a significant need for a way to teach and educate a purchaser of the high-end vehicle how to set up and use the numerous high-end features of the vehicle in a manner that is easy to understand and memorize and does require reading though voluminous instruction manuals.

A further embodiment is a method of teaching individuals how to operate all of the various accessories through a program where the individual is taught by a teacher in the vehicle with the individual for a period of time, such as a one-hour class and then following up the lesson with auditory, visual and written programs that summarize what the instructor taught during the previous one-hour session.

It is therefore desirable to provide a method of teaching a purchaser of a vehicle how to set up, use and operate all of the various accessories that either come with the high-end vehicle or are an optional purchase for the vehicle.

It is further desirable to establish at least one supervisory organization to recruit qualified teachers in desirable geographic locations who are licensed to teach automobile driving and operation of accessories in new high-end market vehicles.

It is also desirable to establish at least one supervisory organization to advertise for new student customers and arrange for the live one-on-one teaching of an embodiment. One method is to establish relationships with new vehicle dealers who sell the high-end vehicles. The salesmen are usually too busy to allocate a significant amount of time for detailed instructions on operation of numerous vehicle features. They want to close a sale. Therefore, as part of the present invention, gift cards will be provided to the dealership. If a person purchases a high-end vehicle, they are given a teaching gift card for a free teaching lesson such as one one-hour lesson or a two -hour lesson, etc. This will help close a sale, will not cost the dealership or salesperson any money, and if the new vehicle purchaser is happy with the trial lesson, the new vehicle purchaser can buy more lessons.

It is also desirable to provide a method for teaching the vehicle owner how to use these features by use of a certified instructor as opposed to books or manuals.

It is also desirable to utilize teachers that will provide in-person teaching to a student who purchased or is about to purchase a high-end vehicle based on a geographical matching of the location of a teacher and the location of a student.

In general, some of the high-end vehicle accessories which are difficult to operate and are examples for why a high-end vehicle buyer would use the live instructor as proposed are listed below:
1. Passenger seat adjustment including heat, massage, vibration, headrest adjustment, back adjustment, moving closer or farther away from the steering wheel, height of seat, tilt of seat and backrest;
2. Side mirrors and rear view mirrors including adjusting the mirrors, night vision, and blind spot;
3. Parking assistance such as self-parking features;
4. Backup warning;
5. Camera operation while driving;
6. Automatic lane change;
7. Automatically slowing down in heavy traffic and automatically speeding up in light traffic;
8. Headlight adjustment for night, smog, rain and snow;
9. Steering wheel adjustment including adjusting the steering wheel forwards, backwards and different angles from horizontal;
10. Console instruments including setting the clock, opening and locking the gas tank cover, opening and locking the trunk, setting gauges for fuel, oil, tire pressure, heating and air conditioning.

Defined broadly, an embodiment of the present invention is a method of teaching how to operate portions of a vehicle, comprising:
a. obtaining the services of a teacher who has the qualifications of teaching how to drive an automobile and which teacher is trained and knowledgeable on how to operate technical apparatus and instruments in the vehicle and has the qualifications of teaching how to operate technical apparatus and instruments in the vehicle; and
b. conducting a live one-on-one tutorial with said teacher providing instruction to a student on how to operate at least one apparatus of the vehicle with the teacher seated in a driver's seat of the vehicle and providing live instruction and tutorial on operating the at least one instrument to the student seated in a passenger seat adjacent the driver's seat.

Further defining the broad definition, an embodiment of the present invention includes method of teaching how to operate portions of a vehicle in accordance with the broad definition further comprising: continuing the live one-on-one tutorial with the teacher seated in the passenger seat next to the driver's seat and the student seated in the driver's seat, the student operating the same at least one instrument to demonstrate knowledge gained in the operation of the at least one instrument during the tutorial while the teacher observers the student and approves the student's operation of the at least one instrument or corrects mistakes made by the student until the student correctly operates the at least one instrument.

The method of teaching how to operate portions of a vehicle as discussed in the broad definition and the further definition, the at least one instrument is selected from the group consisting of: driver controls, steering wheel gearshift paddles, combination switching- turn signals which beams direct select lever, passenger air bag indicator lamps, display - multimedia system, start/stop button - all four positions, climate control systems, driver safety systems, active distance assist, active speed limit assist, active brake assist, active lane keep assist, active lamp change assist, active blind spot assist, active emergency stop assist, active traffic sign assist, rear view mirror adjustment, side mirror adjustment, operating console instruments, setting clock, open and lock gas tank cover, open and lock trunk, setting gauges for fuel, oil, tire pressure, heating, air conditioning and brakes, driver's seat adjustment for heat, massage, vibration, headrest adjustment, height of seat, tilt of seat and backrest, moving seat closer to steering wheel and farther away from steering wheel, passenger seat adjustment for heat, massage, vibration, headrest adjustment, height of seat, tilt of seat and backrest, rear view mirror adjustment - night vision, smog, bright sunlight, blind spot, parking assistance, backup warning, camera operation while driving, operating automatic lane change, operating automatic slow down in heavy traffic and automatic speed up in light traffic, operating headlight adjustment in darkness, smog, rain and snowstorm.

Preferably, but not exclusively, said teacher is selected from a driving school.

Alternatively defined broadly, an embodiment of the present invention is a method of teaching how to operate portions of a vehicle, comprising:
a. obtaining the services of a teacher who has the qualifications of teaching how to drive an automobile and which teacher is trained and knowledgeable on how to operate technical apparatus and instruments in the vehicle and has the qualifications of teaching how to operate technical apparatus and instruments in the vehicle; and
b. conducting a live one-on-one tutorial with said teacher providing instruction to a student on how to operate at least one apparatus of the vehicle with a student seated in a driver's seat of the vehicle and the teacher seated in a passenger seat adjacent the driver's seat and providing live instruction and tutorial on operating the at least one instrument to the student.

Further defining the alternative broad definition, an embodiment of the present invention is a method of teaching how to operate portions of a vehicle, further comprising: continuing the live one-on-one tutorial with said teacher providing instruction to a student on how to operate said at least one apparatus of the vehicle with the teacher seated in a driver's seat of the vehicle and repeating providing live instruction and tutorial on operating the at least one instrument to the student seated in the passenger seat adjacent the driver's seat.

Also further defining the alternative broad definition, an embodiment of the present invention is a method of teaching how to operate portions of a vehicle, further comprising: continuing the live one-on-one tutorial with the teacher seated in the passenger seat next to the driver's seat and the student seated in the driver's seat, the student operating the same at least one instrument to demonstrate knowledge gained in the operation of the at least one instrument during the tutorial while the teacher observers the student and approves the student's operation of the at least one instrument or corrects mistakes made by the student until the student correctly operates the at least one instrument.

For each alternative method of teaching, the at least one instrument is selected from the group consisting of: driver controls, steering wheel gearshift paddles, combination switching-turn signals; high beams, direct select lever, passenger air bag indicator lamps, display - multimedia system, start/stop button - all four positions, climate control systems, driver safety systems, active distance assist, active speed limit assist, active brake assist, active lane keep assist, active lamp change assist, active blind spot assist, active emergency stop assist, active traffic sign assist, rear view mirror adjustment, side mirror adjustment, operating console instruments, setting clock, open and lock gas tank cover, open and lock trunk, setting gauges for fuel, oil, tire pressure, heating, air conditioning and brakes, driver's seat adjustment for heat, massage, vibration, headrest adjustment, height of seat, tilt of seat and backrest, moving seat closer to steering wheel and farther away from steering wheel, passenger seat adjustment for heat, massage, vibration, headrest adjustment, height of seat, tilt of seat and backrest, rear view mirror adjustment - night vision, smog, bright sunlight, blind spot, parking assistance, backup warning, camera operation while driving, operating automatic lane change, operating automatic slow down in heavy traffic and automatic speed up in light traffic,
operating headlight adjustment in darkness, smog, rain and snowstorm.

For each alternative method preferably, but not exclusively, said teacher is selected from a driving school.

In addition, defined in detail, an embodiment of the present invention is a method of teaching comprising:
a. creating a legal entity to implement said method of teaching including a teaching supervisor in the legal entity;
b. selecting a teaching vehicle, said teaching vehicle including at least five accessories developed within a five year period prior to the formation of the legal entity and included in a sales period selected from the group consisting of the teaching vehicle sales year and within six months after the formation of the legal entity;
c. selecting at least two trial locations where at least one student in each trial location purchased or leased a teaching vehicle within the last five years before strep "a";
d. selecting at least one driving school defined as qualified driving school in each trial location employing at least one instructor defined as teacher knowledgeable about setting up and operating each of said at least five accessories in said teaching vehicle;
e. creating a teaching plan with teacher on teaching set-up and operation of said at least five accessories for said teaching vehicle;
f. establishing a business relationship with at least one automobile dealership in at least one of said trial locations with a track record of sales of the teaching vehicle within five years before step "a", and coordinating location radius relative to customers and potential customers of said teaching vehicle who purchased or leased or will purchase or lease said teaching vehicle within at least the last five years before step "a" and was not understanding how to set up and operate said at least five accessories and arranging for at least one teaching session between said student and said teacher; and
g. said teacher educating said student on how to set up and operate said at least five accessories of said teaching vehicle, said teacher using said teaching plan through live one-on-one instruction from the teacher to the student with positioning of both the teacher and the student seated within said teaching vehicle selected from the group consisting of said student in a driver's seat of said teaching vehicle with said teacher in a passenger seat of said teaching vehicle and said teacher in the driver's seat of the teaching vehicle with said student in the passenger seat of said teaching vehicle.

### BRIEF DESCRIPTION OF THE DRAWINGS

Referring particularly to the drawings for the purpose of illustration only and not limitation, there is illustrated:
FIG. 1 is a block diagram of the initial steps in implementing the present embodiment method of teaching how to operate accessories of an expensive vehicle through live one-on-one instruction from teacher to student;
FIG. 2 is a block diagram of the initial steps in establishing a teaching relationship with a wealthy individual who has purchased or will purchase a Trial Vehicle;
FIG. 3 is a block diagram for obtaining legal protection with proprietary trade dress, trademarks and patents;
FIG. 4A is a first sheet, FIG. 4B is a second continuation sheet, FIG. 4C is a third continuation sheet, FIG. 4D is a fourth continuation sheet and FIG. 4E is the last continuation sheet, all continuously illustrating a block diagram for creating teacher workbook lessons;
FIG. 5 is a block diagram for creating student workbooks with questionnaires to review each lesson taught live one-on-one from teacher to student to determine if student learned the information on the Trial Vehicle accessory from the immediately preceding lesson;
FIG. 6 is a block diagram for a student workbook;
FIG. 7 is a block diagram for video tape live instruction and audio tape live instruction;
FIG. 8 is a block diagram for supervisory personnel to review results of the first six months of operation to determine economic viability of business;
FIG. 9 is a block diagram for teaching gearshift paddles;
FIG. 10 is a block diagram for teaching a combination switch;
FIG. 11 is a block diagram for teaching a direct select lever;
FIG. 12A is a first sheet and FIG. 12B is second continuation sheet which combined, illustrate a block diagram for teaching air bag indicator lamps;
FIG. 13A is a first sheet and FIG. 13B is second continuation sheet which combined, illustrate a block diagram for teaching the start/stop buttons;
FIG. 14A is a first sheet and FIG. 14B is second continuation sheet which combined, illustrate a block diagram for teaching climate control systems; and
FIG. 15A is a first sheet and FIG. 15B is second continuation sheet which combined, illustrate a block diagram for teaching driver safety systems.

### DETAILED DESCRIPTION OF EMBODIMENTS OF THE PRESENT INVENTION

Although specific embodiments of the present invention will now be described with reference to the drawings, it should be understood that such embodiments are by way of example only and merely illustrative of but a small number of the many possible specific embodiments which can represent applications of the principles of the present invention. Various changes and modifications obvious to one skilled in the art to which the present invention pertains are deemed to be within the spirit, scope and contemplation of the present invention as further defined in the appended claims.

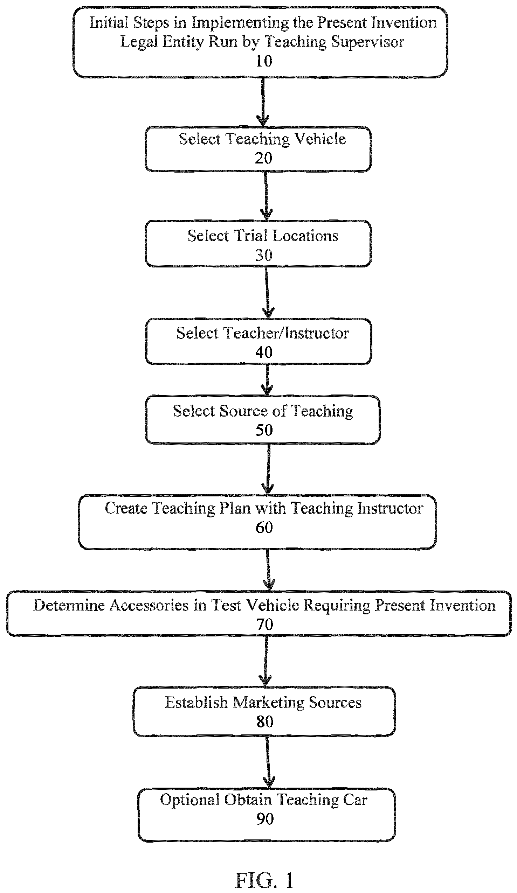

Referring to Figure 1, there is illustrated a block diagram of the initial steps in implementing the present embodiment method of teaching how to operate accessories of an expensive vehicle through live one-on-one instruction from teacher to student. One preferred sequence of formulating steps are as follows:
A. Create starting legal entity to implement the present embodiment (such as forming a corporation, including initial required investment, establishing control and day to day operation personnel) - run by Teaching Supervisor - 10;
B. Determine group of most popular high-end vehicles sold in the past year (Teaching Vehicles); - 20;
C. Select at least two trial locations where it has been proven that buyers have purchased at least one Teaching Vehicle over the previous calendar year - (Trial Locations); - 30
D. Select qualified driving school in each Trial Location and establish written business relationship including selecting at least two instructors qualified and certified in Trial Location, teaching times, travel to customer location radius, compensation, etc.; - 40;
E. Select automobile dealership in Trial Locations with track record of sales of Teaching Vehicles and coordinate location radius relative to potential customers and qualified driving school; - 50;
F. Create teaching plan with Teaching Instructor on teaching how to set-up, use and operate five to ten of the most likely accessories for which teaching assistance is likely to be requested; - 60;
F. Create test questionnaire for automobile dealership as to what accessories in Trial Vehicles are most difficult to set up and operate, and if the dealers would refer new vehicle buyers to Teaching Supervisor; - 70;
G. Establish marketing sources to be implemented concurrently with steps A-F including social media, websites, direct mail to Target Customers in Trial Locations; - 80
H. Arrange limited term lease of Teaching Vehicles at Trial Locations; -90

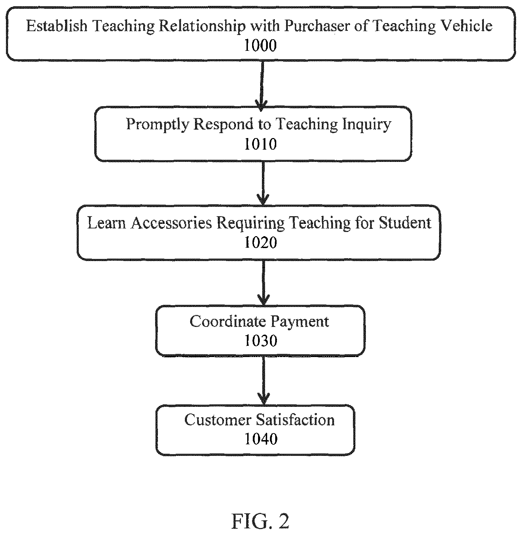

Referring to Figure 2, there is illustrated a block diagram of the initial steps in establishing a teaching relationship with an individual who has purchased or will purchase a Trial Vehicle also called Teaching Vehicle 1000. One preferred sequence of formulating steps are as follows:
A. Promptly respond to teaching inquiry; - 1010;
B. Online questionnaire to be completed by buyer to learn the vehicle model purchased, what accessories have created problems during set up, using and operating the high-end vehicle; - 1020;
C. Coordinate payment from customer, coordinate Teaching Supervisor to communicate with customer for first lesson; - 1030;
D. Follow-up call and/or questionnaire on customer satisfaction; - 1040

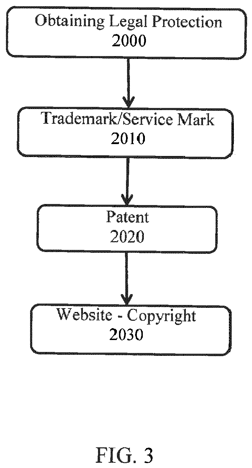

Referring to Figure 3, there is a block diagram for obtaining legal protection with proprietary trade dress, trademarks and patents 2000; One preferred sequence is as follows:
A. Select federal service mark, search for availability of mark, file federal service mark application; - 2010
B. Perform patent search; File patent application; - 2020
C. Establish website and protect website through a copyright; - 2030

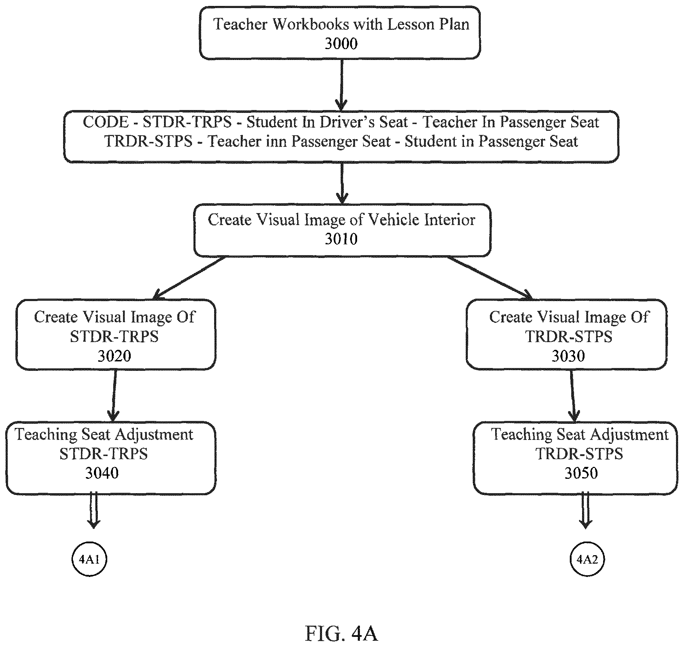

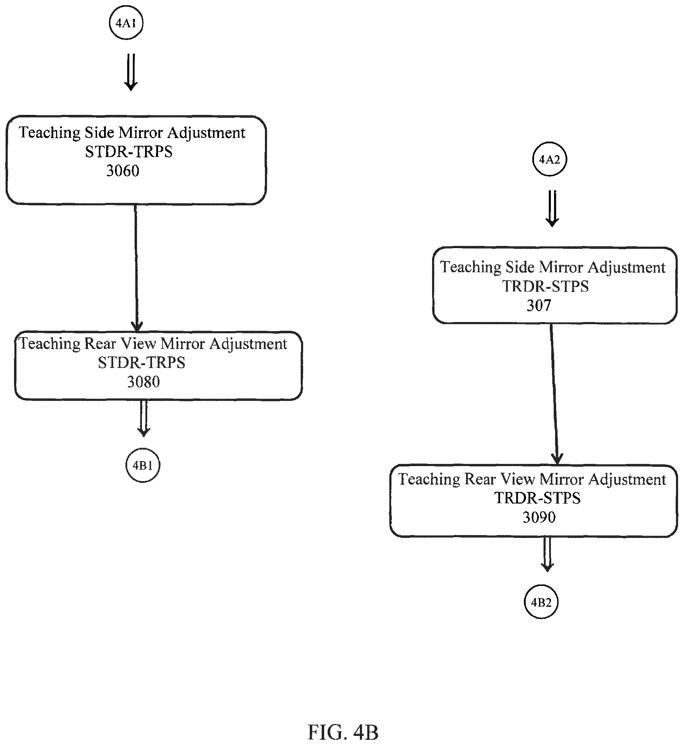

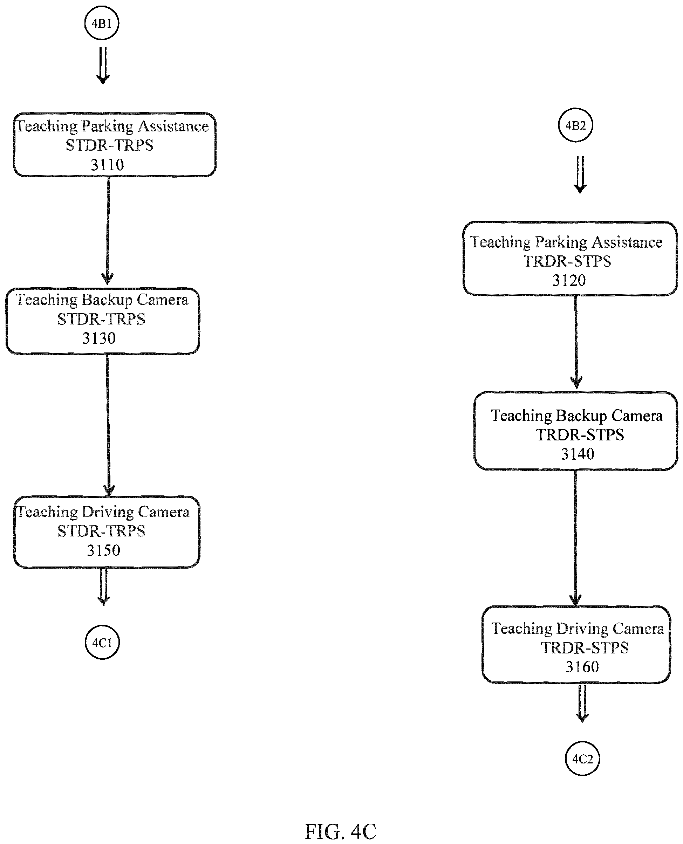

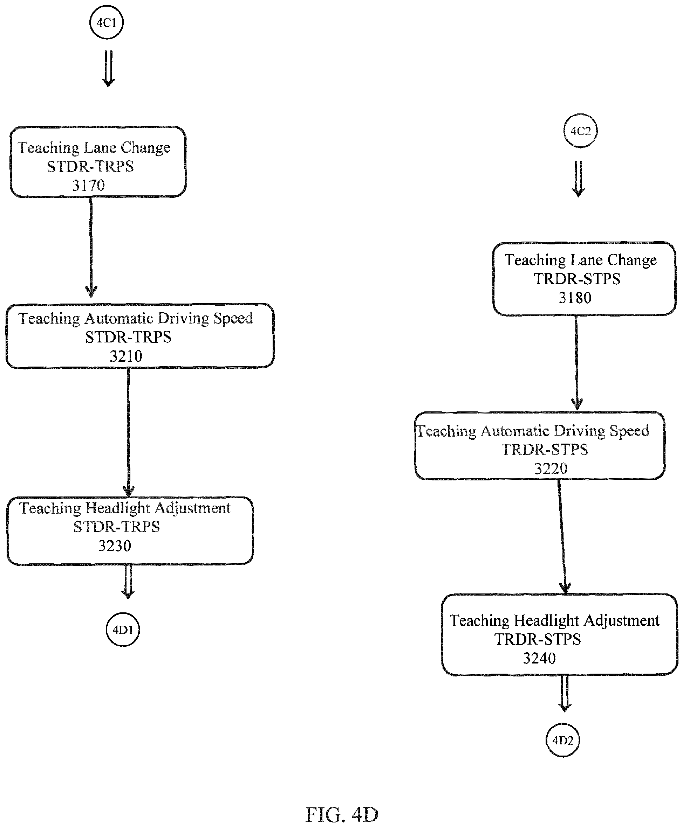

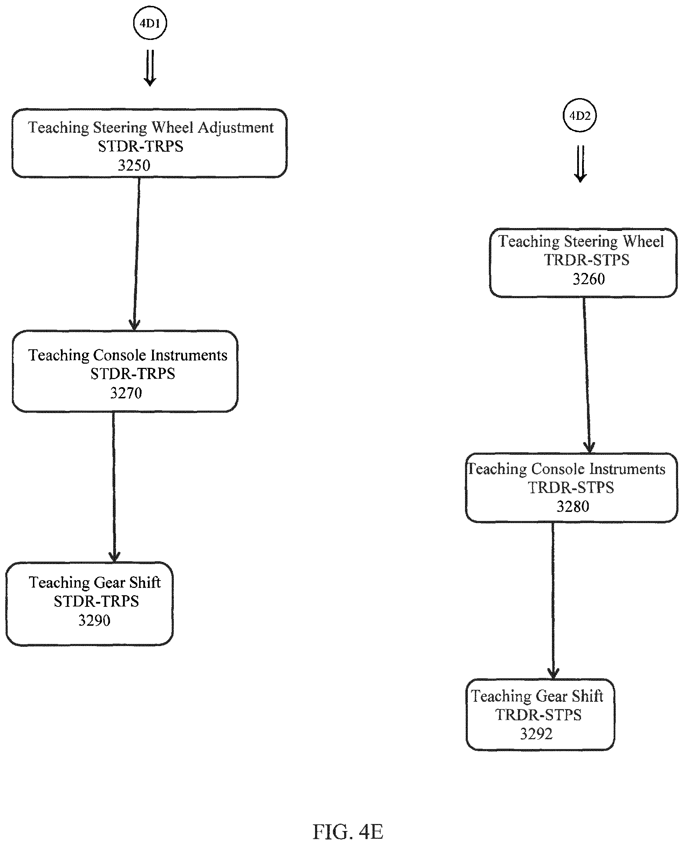

Referring to Figure 4, there is a block diagram for creating teacher workbooks with lesson plans for each vehicle accessory for each Trial Vehicle - 3000. One preferred sequence is as follows:
A, Create visual image of vehicle interior including selected images of driver seat, front passenger seat, backseat and control panel; - 3010
B. Create visual image of student in driver's seat and teacher in passenger seat; - 3020
C. Create visual image of teacher in driver's seat and student in passenger seat; - 3030
D. Create script and visual aids for teaching passenger how to adjust seat including adjusting settings for heat, massage, vibration, headrest adjustment, height of seat, tilt of seat and backrest, moving seat closer to steering wheel and farther away from steering wheel when student in driver's seat and teacher in passenger seat; - 3040
E. Create script and visual aids for teaching passenger how to adjust seat including adjusting settings for heat, massage, vibration, headrest adjustment, height of seat, tilt of seat and backrest, moving seat closer to steering wheel and farther away from steering wheel when teacher in driver's seat and student in passenger seat; - 3050
F. Create script and visual aids for teaching side mirror adjustment when student in driver's seat and teacher in passenger seat; 3060
G. Create script and visual aids for teaching side mirror adjustment when teacher in driver's seat and student in passenger seat; - 3070
H. Create script and visual aids for teaching rear view mirror adjustment when student in driver's seat and teacher in passenger seat; - 3080
I. Create script and visual aids for teaching rear view mirror adjustment when teacher in driver's seat and student in passenger seat; - 3090
J. Create script and visual aids for teaching parking assistance when student in driver's seat and teacher in passenger seat; - 3110
K. Create script and visual aids for teaching parking assistance when teacher in driver's seat and student in passenger seat - 3120
L. Create script and visual aids for teaching how to use rearview camera (backup warning) when student in driver's seat and teacher in passenger seat; - 3130
M. Create script and visual aids for teaching how to use rearview camera (backup warning) when teacher in driver's seat and student in passenger seat; - 3140
N. Create script and visual aids for teaching camera operation while driving when student in driver's seat and teacher in passenger seat; - 3150
O. Create script and visual aids for teaching camera operation while driving when teacher in driver's seat and student in passenger seat; - 3160
P. Create script and visual aids for teaching operating automatic lane change when student in driver's seat and teacher in passenger seat; - 3170
Q. Create script and visual aids for teaching operating automatic lane change when teacher in driver's seat and student in passenger seat; - 3180
R. Create script and visual aids for teaching operating automatic slow down in heavy traffic and automatic speed up in light traffic when student in driver's seat and teacher in passenger seat; - 3210
S. Create script and visual aids for teaching operating automatic slow down in heavy traffic and automatic speed up in light traffic when teacher in driver's seat and student in passenger seat; - 3220
T. Create script and visual aids for teaching operating headlight adjustment in darkness, rain and snow when student in driver's seat and teacher in passenger seat; - 3230
U. Create script and visual aids for teaching operating headlight adjustment in darkness, rain and snow when teacher in driver's seat and student in passenger seat; - 3240
V. Create script and visual aids for teaching operating steering wheel adjustment including moving the seat forward and backward and from different angles when student in driver's seat and teacher in passenger seat; - 3250
W. Create script and visual aids for teaching operating steering wheel adjustment including moving the seat forward and backward and from different angles when teacher in driver's seat and student in passenger seat; - 3260
X. Create script and visual aids for teaching operating console instruments such as setting the clock, opening and locking the gas tank cover, opening and locking the trunk, setting gauges for fuel, oil, tire pressure, heating and air conditioning when student in driver's seat and teacher in passenger seat; - 3270
Y. Create script and visual aids for teaching operating console instruments such as setting the clock, opening and locking the gas tank cover, opening and locking the trunk, setting gauges for fuel, oil, tire pressure, heating and air conditioning when teacher in driver's seat and student in passenger seat; - 3280
Z. Create script and visual aids for teaching operating gear shift lever when student in driver's seat and teacher in passenger seat; - 3290
AA. Create script and visual aids for teaching operating gear shift lever when teacher in driver's seat and student in passenger seat; - 3292

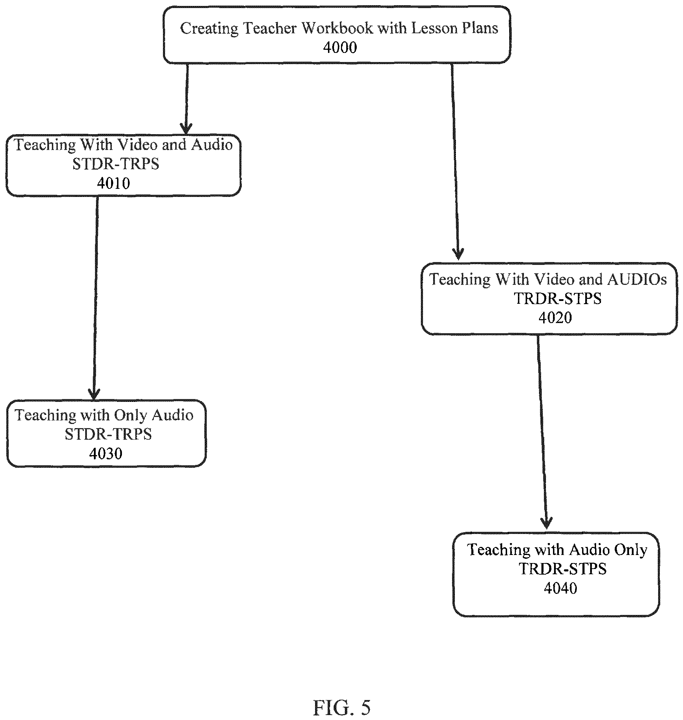

Referring to Figure 5, there is a block diagram for creating the teacher workbook with lesson plan for each vehicle accessory for each Teaching Vehicle 4000. One preferred sequence is as follows:
A, Create visual image of vehicle interior including selected images of driver seat, front passenger seat, backseat and control panel; - 4010
B. Create visual image of student in driver's seat and teacher in passenger seat; - 4020
C. Create visual image of teacher in driver's sear and student in passenger seat; - 4030
D. Create script and visual aids for teaching passenger seat adjustment including settings for heat, massage, vibration, headrest adjustment, height of seat, tilt of seat and backrest; - 4040

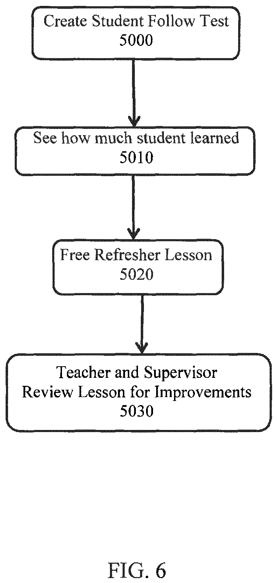

Referring to Figure 6, there is illustrated a block diagram for creating a student workbook with questionnaire to review after each lesson to determine if the student learned the information on the Trial Vehicle accessory from the immediately preceding lesson 5000. One preferred sequence is as follows:
A. If the student makes a grade of over75 %, the teacher gives a free one-half hour lesson to once again teach the portion not correctly learned by th student; -5010
B. If the student makes a grade of 74.9% or lower, student agrees to pay full price for a second refresher lesson on the entire immediately preceding lesson; - 5020;
C. Teacher and supervisor personnel review teacher workbook to determine how to improve any lesson where the student did not score at least 75%; 5030

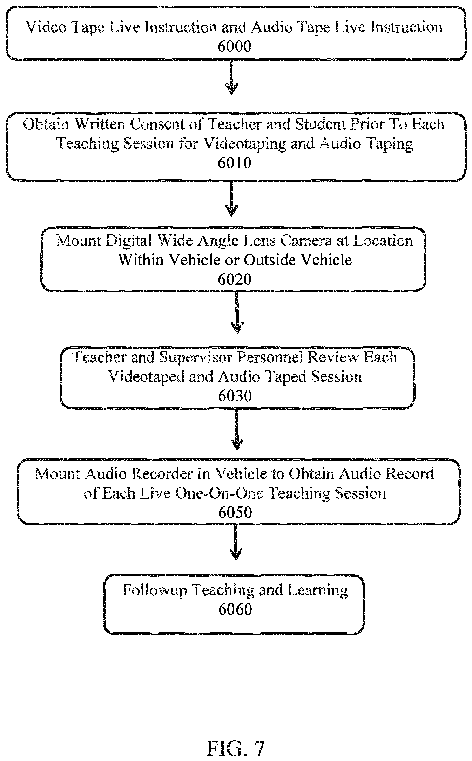

Referring to Figure 7, there is illustrated a block diagram for video tape live instruction and audio tape live instruction 6000. One preferred sequence is as follows:
A. Obtain written consent of teacher and student prior to each teaching session for videotaping and audio taping; - 6010
B. Mount digital wide angle lens camera at location within vehicle or outside vehicle to obtain audio and video record of each live one-on-one teaching session; - 6020
C, Teacher and supervisor personnel review each video taped and audio taped session to improve teaching presentation and information provided to student; - 6030
D. Mount audio recorder in vehicle to obtain audio record of each live one-on-one teaching session; - 6050
E. If student is not learning from live one-on--one session, teacher and student will watch either video and audio or listen to audio recording with recording stopped at location or locations where student did not learn or understand how to set up, use and operate the accessory and teacher will explain the information once again with the student wherein the teacher will explain what the student did not understand so teacher can address questions of student to improve the teaching lesson; 6060

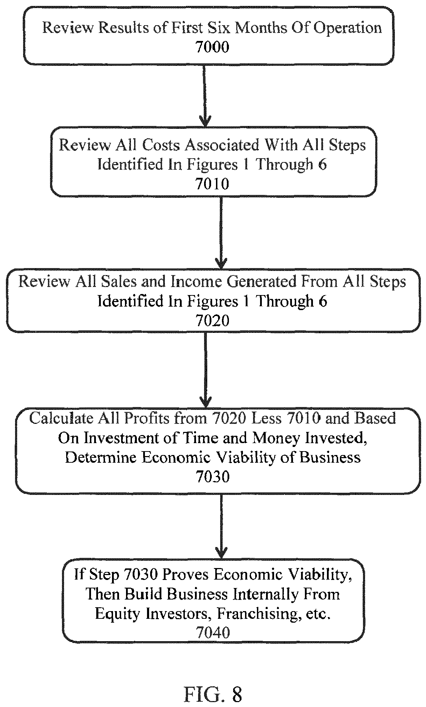

Referring to Figure 8, there is illustrated a block diagram for the supervisory personnel to review results of first six months of operation to determine economic viability of business 7000. One preferred sequence is as follows:
A. Review all costs associated with all steps identified in Figures 1 through 6 - 7010
B. Review all sales and income generated from all steps identified in Figures 1 through 6; - 7020
C. Calculate all profits from 7020 less 7010 and based on investment of time and money invested, determine economic viability of business; - 7030
D. If step 7030 proves economic viability, then build business internally from equity investors, franchising, etc; - . 7040

Detailed of the present embodiment is further discussed and teaching details are discussed in the following sections.

### Driver Controls

### Steering Wheel Gearshift Paddles What it Does

Steering Wheel Gearshift Paddles are used for manually "up-shifting" and "down-shifting" when the driver wants to feel more connected with the vehicle through increased performance. ***CAUTION***

Using manual paddle shifters will decrease fuel economy and may cause hazardous conditions on slippery road surfaces.

### To Use:

When moving forward in any gear, quickly pull the "42' paddle to "up shift" or the "-"paddle to "downshift" as road conditions dictate.

The gearshift recommendation assists the driver in adopting a more economical driving style. If the gearshift recommendation message is shown in the multifunction display, shift to the recommended gear.

### To Deactivate:

When in the manual shift mode, pull the paddle shifter and hold in place until the transmission position "0" appears in the multifunction display.
if the "Manual Drive Setting" in the drive program "1" is selected, then manual gear-shifting is permanently activated.

### HOW THE PRESENT EMBODIMENT IS USED TO TEACH GEARSHIFT PADDLES

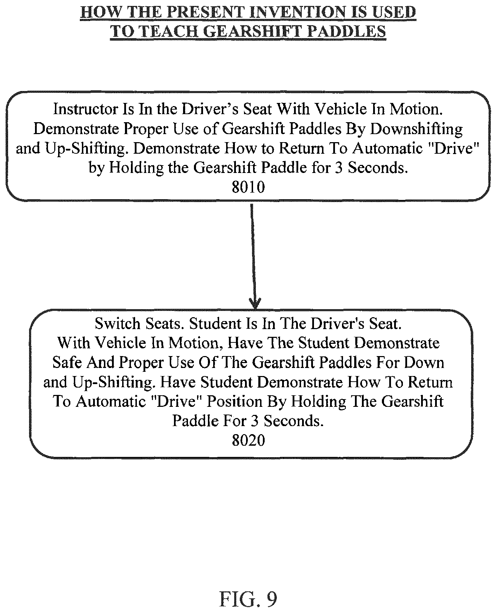

1. Referring to Figure 9, there is illustrated a block diagram for teaching gearshift paddles:
   A. Instructor is in the driver's seat with vehicle in motion. Demonstrate proper use of Gearshift paddles by downshifting and up-shifting. Demonstrate how to return to automatic "Drive" by holding the gearshift paddle for 3 seconds. - 8010
   B. Switch seats. Student is in the driver's seat. With vehicle in motion, have the student demonstrate safe and proper use of the gearshift paddles for down and up-shifting. Have student demonstrate how to return to automatic "Drive" position by holding the gearshift paddle for 3 seconds.

### Combination Switch (Turn Signals/High Beams)

### Turn Indicators;

To indicate briefly: Push the control arm down (left) or up (right) just to the pressure point

To indicate continuously: Push the control arm down (left) or up (right) past the pressure point

### High and Low Beams

To activate high-beams; Push the control arm away (towards the dashboard) beyond the pressure point.

To de-activate high-beams; Pull the control arm (towards you) into its original position.

To flash high-beams; Pull the control arm towards you and release. High-beams will activate as long as you are holding the control arm towards you.

### HOW THE PRESENT EMBODIMENT TEACHES COMBINATION SWITCH (TURN SIGNALS/ HIGH BEAMS)

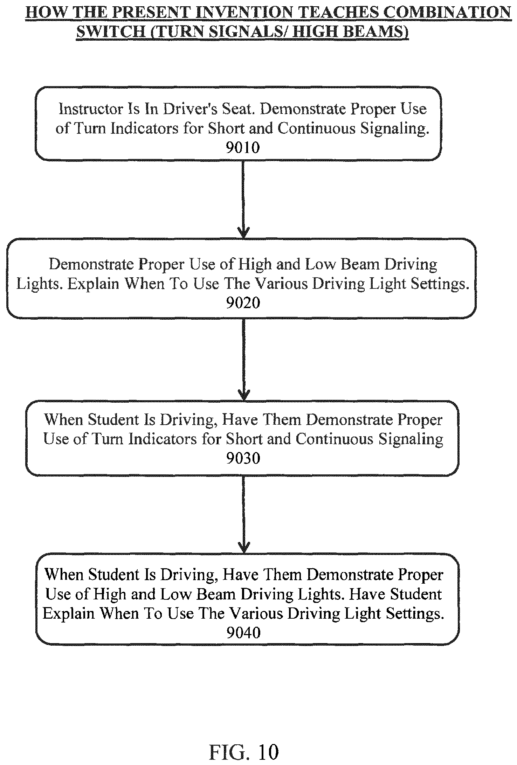

1. Referring to Figure 10, there is illustrated a block diagram for teaching combination switch.
   A. Instructor is in Driver's Seat. Demonstrate proper use of turn indicators for short and continuous signaling. - 9010
      Demonstrate proper use of high and low beam driving lights. Explain when to use the various driving light settings. - 9020
   B. When student is driving, have them demonstrate proper use of turn indicators fo r short and continuous signaling. - 9030
      When student is driving, have them demonstrate proper use of high and low beam driving lights. Have student explain when to use the various driving light settings. - 9040

### Direct Select Lever

Use the DIRECT SELECT lever to shift the transmission position (displayed in the multifunction display)
P: Park; Press the button inward at the end of the control arm. Park position is engaged automatically if one of the following conditions are met:
   " If the engine is switched off, with the transmission in "D" or "R"
   " If the driver's door is open when the vehicle is stationary or when driving at a very low speed and the transmission is in "D" or "R"
R: Reverse; Depress the brake pedal and push the DIRECT SELECT lever up past the first point of resistance.
N: Neutral; Depress the brake pedal and bush the DIRECT SELECT lever up or down to the first point of resistance.

### HOW THE PRESENT EMBODIMENT TEACHES DIRECT SELECT Lever

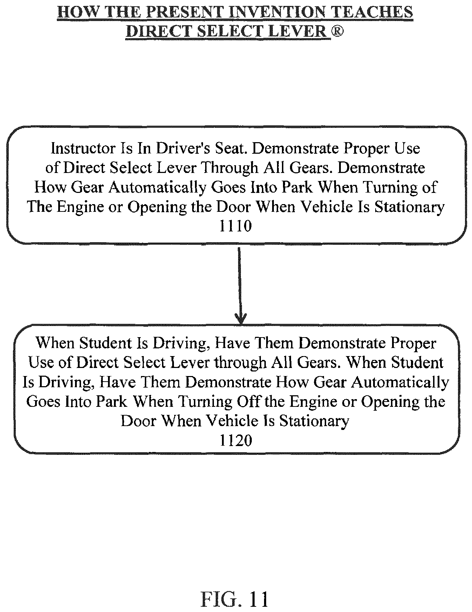

1. Referring to Figure 11, there is illustrated a block diagram for teaching direct select lever.
   A. Instructor is in Driver's Seat. Demonstrate proper use of Direct Select Lever through all gears. Demonstrate how gear automatically goes into Park when turning off the engine or opening the door when vehicle is stationary. - 1110
   B. When student is driving, have them demonstrate proper use of Direct Select Lever through all gears. When student is driving, have them demonstrate how gear automatically goes into Park when turning off the engine or opening the door when vehicle is stationary.- 1120

### PASSENGER AIR BAG indicator lamps

The automatic front passenger air bag shutoff is able to detect whether the front passenger seat is occupied by a person or a child restraint system. The front passenger air bag is enabled or deactivated accordingly.

System self-test: When the ignition is switched on, a system self-test is performed during which the two PASSENGER AIR BAG ON and OFF indicator lamps light up simultaneously.

The status of the front passenger air bag is displayed after the system self-test: R PASSENGER AIR BAG ON lights up for 60 seconds, subsequently both PASSENGER AIR BAG ON and OFF indicator lamps are off: the front passenger air bag is able to deploy in the event of an accident.

R PASSENGER AIR BAG OFF lights up continuously: the front passenger air bag is deactivated. It will then not be deployed in the event of an accident.

If the PASSENGER AIR BAG ON indicator lamp is off, only the PASSENGER AIR BAG OFF indicator lamp shows the status of the front passenger air bag_

The PASSENGER AIR BAG OFF indicator lamp may be lit continuously or be off.

If the PASSENGER AIR BAG OFF indicator lamp and the 6 restraint system warning lamp light up simultaneously, the front passenger seat may not be used. Also in this case, do not install a child restraint system on the front passenger seat. Have the automatic front passenger air bag shutoff checked and repaired immediately at a qualified specialist workshop.

Status display: If the front passenger seat is occupied, ensure, both before and during the journey, that the status of the front passenger air bag is correct for the prevailing situation. After installing a rearward-facing child restraint system on the front passenger seat: PASSENGER AIR BAG OFF must be lit continuously.

### HOW THE PRESENT EMBODIMENT TEACHES PASSENGER AIR BAG INDICATOR LAMPS

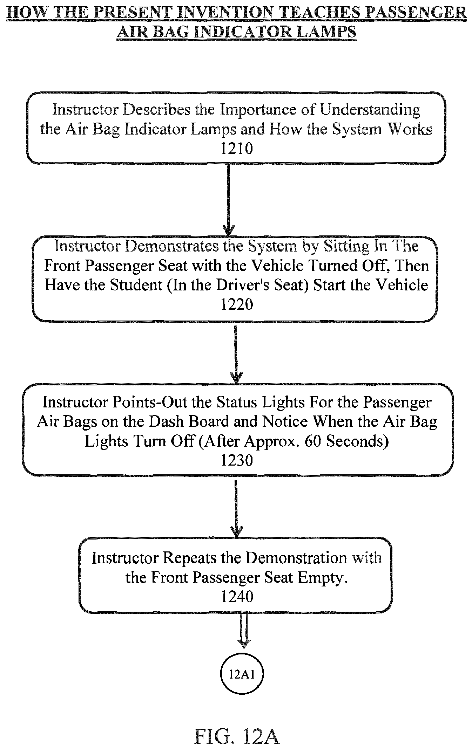

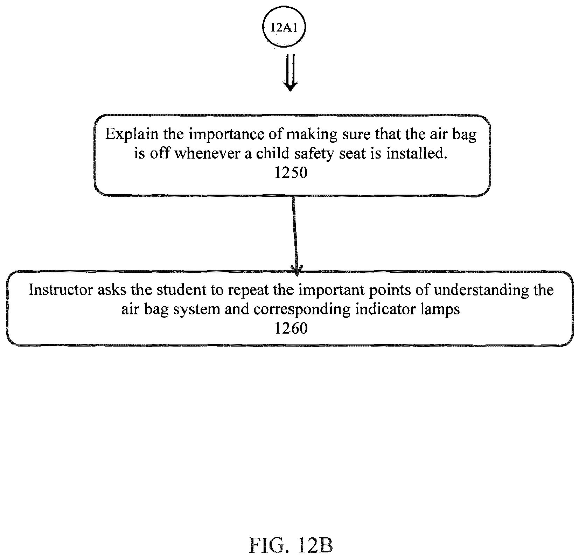

1. Referring to Figures 12A and 12B, there is illustrated a block diagram for teaching air bag indicator lamps.
   A. Instructor describes the importance of understanding the air bag indicator lamps and how the system works - 1210
   B. Instructor demonstrates the system by sitting in the front passenger seat with the vehicle turned off, then have the student (in the driver's seat) start the Vehicle - 1220
   C. Instructor points -out the status lights for the passenger air bags on the dash board and notice when the air bag lights turn off (after approx. 60 seconds).- 1230
   D. Instructor repeats the demonstration with the front passenger seat
      Empty. - 1240
   E. Explain the importance of making sure that the air bag is off whenever a child safety seat is installed. -1250
   F. Instructor asks the student to repeat the important points of understanding the air bag system and corresponding indicator lamps. - 1260

### Display (Multimedia System]

The Multimedia Display had multiple control points which are displayed on the monitor screen. The functions and controls will be covered later.

The display has a highly sensitive, high-gloss surface. There is a risk of it becoming scratched. Avoid touching the display. Observe the notes on cleaning.

### Start/Stop Button There are 4 positions for the ignition;

1) Off/Locked
2) Accessory: limited electronics (radio). To activate; Press the Start Button once with your foot off of the brake. To deactivate, open the driver door or press the Start Button once again with your foot off of the brake.
3) On: All electronics are on, but engine is not. This position is mainly for vehicle maintenance and diagnostics. It draws a lot of energy from the battery and may cause the battery to fail quickly. Do Not use this position for listing to the radio or running the air conditioning/heater while sitting in the car without the motor on. To Activate; press the Start Button two-times in quick succession. To de-activate; press the Start Button two times.
4) Start: Motor is on, all electronic systems are active. To start the vehicle;
   Transmission must be in "P" or "N". Depress the brake pedal and push the Start Button once.

If the vehicle does not start and the "Place the Key in the Marked Space See Operators' Manual" display message also appears in the multifunction display: start the vehicle in emergency operation mode.

Make sure that the space above the front console cup-holders is empty. Remove SmartKey from the key ring. Place SmartKey in the space . The vehicle will start after a short while. If you remove SmartKey from the space, the engine continues running. For further vehicle starts however, SmartKey must be located in the space during the entire journey. Have SmartKey checked at a qualified specialist workshop. If the vehicle does not start: Leave SmartKey in marked space. Depress the brake pedal and start the vehicle using the start/stop button.

### HOW THE PRESENT EMBODIMENT TEACHES start/stop button

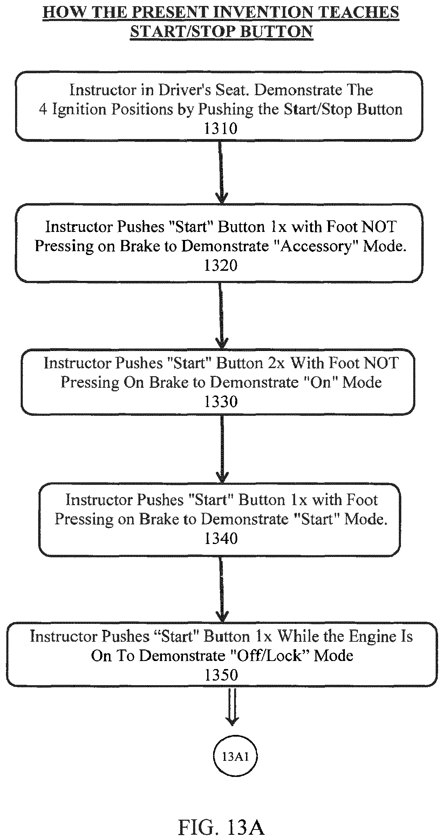

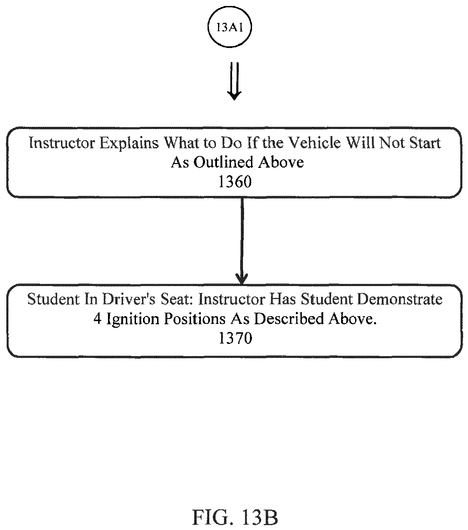

1. Referring to Figures 13A and 133B, there is illustrated a block diagram for teaching the start/stop button
   A. Instructor in driver's seat. Demonstrate the 4 ignition positions by pushing the Start/Stop button. - 1310
   B. Instructor pushes "Start" button 1x with foot NOT pressing on brake to demonstrate "Accessory" mode. - 1320
   C. Instructor pushes "Start" button 2x with foot NOT pressing on brake to demonstrate "On" mode - 1330
   D. Instructor pushes "Start" button lx with foot pressing on brake to demonstrate "Start" mode. - 1340
   E. Instructor pushes "Start" button lx while the engine is on to demonstrate "Off/Lock" mode. -1350
   F. Instructor explains hat to do if the vehicle will not start as outlined above.
   G. Student in driver's seat: Instructor has student demonstrate 4 ignition positions as described above.

### THE FOLLOWING ADDITIONAL SUBJECTS ARE ALSO TAUGHT USING THE PRESENT EMBODIMENT

### Climate Control Systems

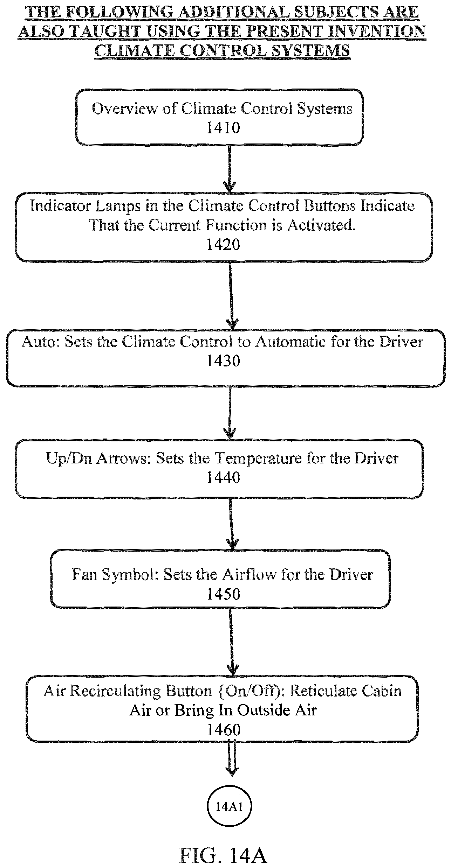

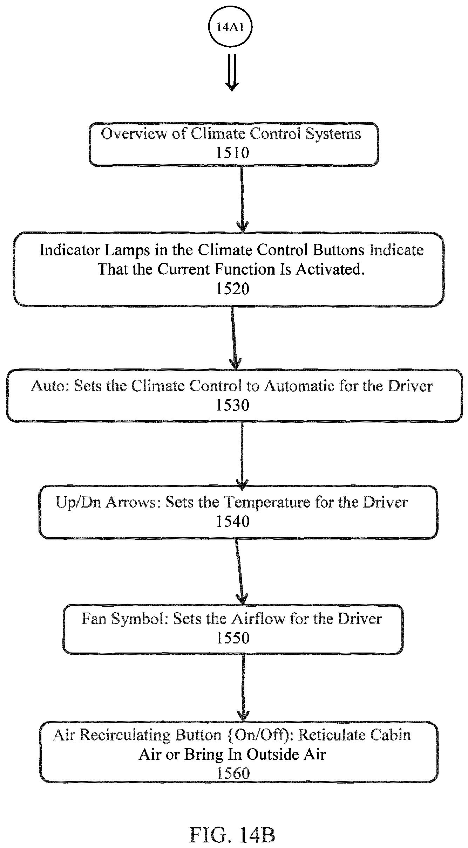

Referring to Figures 14A and 14B, there is illustrated:

### Overview of Climate Control Systems

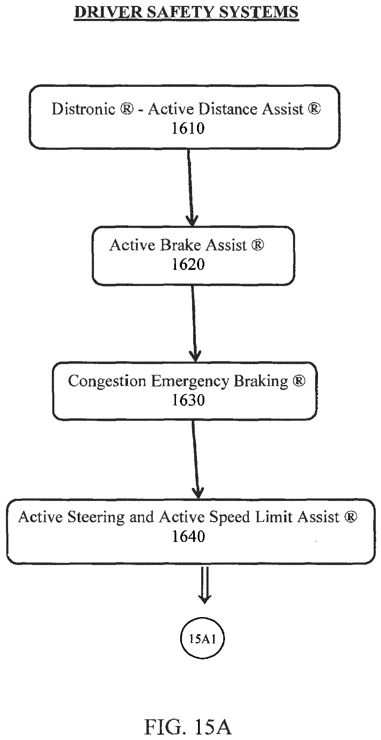

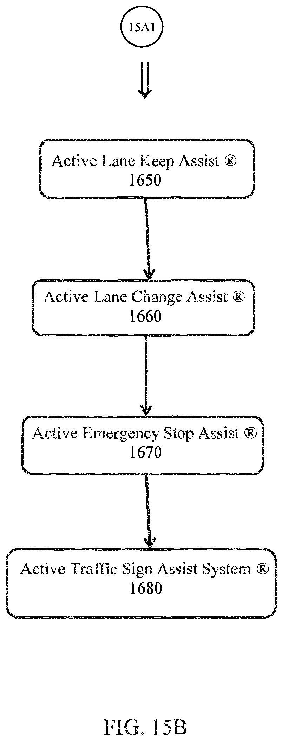

Indicator lamps in the climate control buttons indicate that the current function is activated.
1. Auto: sets the climate control to automatic for the driver
2. Up/Dn Arrows: sets the temperature for the driver
3. Fan Symbol: sets the airflow for the driver
4. Air recirculating button {on/off): reticulate cabin air or bring in outside air Referring to Figures 15A and 15B, there is illustrated:

### Driver Safety Systems

### Active Distance Assist. - 1610

19.1 This feature uses more map and navigation data to support the driver based on their route, while its Active Speed Limit Assist is able to adjust your vehicle's speed. The cruise control system automatically adapts the user's set speed according to the vehicle ahead of it. The user's vehicle automatically works to maintain a previously set distance between itself and the vehicle ahead of it. Should the vehicle ahead of te user speed up or slow down, the vehicle will automatically speed up or apply brakes to maintain a safe distance.

### Active Brake Assist- 1620

Active Brake Assist with cross-traffic function is able to identify slower-moving, stopping and stationary vehicles as well as crossing traffic at junctions, vehicles at the end of queues in congested traffic as well as pedestrians within hazardous areas. If the sensor system detects potential danger, the system warns the driver both visually and audibly. If the driver does not react, Active Brake Assist brakes the vehicle autonomously. At the tail end of a queue, the tail-end emergency braking function can automatically reduce speed.
in an emergency situation, the Active Brake Assist warns the driver of the oncoming danger and, depending on the distance and size of the obstacle ahead, sends out an acoustic or visual warning to alert the driver. If the driver reacts in time, the Active Brake Assist supports the driver in applying pressure to the brakes, and if the driver reacts too slowly, the automatic braking system will be activated.

The Active Brake Assist can be activated and deactivated as and when the driver pleases. Additionally, it can be set to one of three modes, "Early", "Medium" and "Late" - each of which determines the sensitivity of the driver assist program.
By interpreting your driving behavior, Active Brake Assist provides an intuitive safety measure that will bring your vehicle to a halt or reduce the speed exactly when you need it most.

19.2. Congestion Emergency Braking - 1630 The Active Brake Assist emergency braking system in commercial vehicles is based on the radar system used in Telligent proximity control. It uses the proximity control system's three radar antennae to detect moving obstacles in front of the vehicle, and continuously monitors the speed differential between the two vehicles. The first generation of the radar system had a range of 150 meters in the lane ahead of the vehicle. This radar technology allows the Active Brake Assist system to operate whatever the weather or lighting conditions.

### 19.3. Active Steering and Active Speed Limit Assist - 1640

Active Steering Assist Supports the driver by assisting when the driver begins to drift from their lane without signaling_ The system can generate steering torque to keep the vehicle in position in its lane. The Evasive Steering Assist function can help the driver when attempting to avoid a pedestrian in a hazardous situation. If the driver initiates an evasive manoeuver by pulling hard on the steering wheel, the system assists this manoeuver with additional steering torque.
5. Active Lane Keep Assist - 1650 and Active Blind Spot Assist provide assistance if the
   vehicle inadvertently drifts out of its lane or if there is a danger of colliding with other vehicles when changing lanes. One-sided brake interventions can help to steer it back into lane / avoid an accident. Active Blind Spot Assist is also able to identify cyclists to additionally assist drivers in city traffic.
6. Active Lane Change Assist - 1660 With the tap of the indicator stalk, the S-Class Active Lane Change Assist can be activated. The car will change lanes within the next ten seconds, if the vehicle doesn't detect any vehicles in its vicinity.
7. Active Emergency Stop Assist - 1670 if the driver's attention is elsewhere during a potential accident, the S-Class's Active Emergency Stop Assist is able to brake the vehicle to a stop when the Active Steering Assist feature is engaged and the driver does not react to a threat in a timely manner
8. Active Traffic Sign Assist System - 1680 reads posted speed limits and displays them for the current section of the route through image recognition and information from the navigation system's digital road map.
9. PRE-SAFE PLUS adds to the already familiar occupant protection measures. The system can identify impending rear-end collisions and warn drivers of vehicles behind with flashing lights. It also initiates the preventive PRE-SAFE® occupant protection measures, including activating the reversible belt tensioners. If the vehicle is stationary, PRE-SAFE® PLUS holds it in a hard brake. This reduces the force of the jolt forwards, which can also help to reduce the risk of whiplash considerably.
10. PRE-SAFE° Impulse Side is able to move the driver's or front passenger's head and torso towards the center of the vehicle in the event of an impending side collision. As a result, the distance between occupant and door is increased to soften the impact with the door panel.

Of course the present invention is not intended to be restricted to any particular form or arrangement, or any specific embodiment, or any specific use, disclosed herein, since the same may be modified in various particulars or relations without departing from the spirit or scope of the claimed invention hereinabove shown and described of which the apparatus or method shown is intended only for illustration and disclosure of an operative embodiment and not to show all of the various forms or modifications in which this invention might be embodied or operated.

## Claims

1. A method of teaching how to operate portions of a vehicle, comprising:
a. obtaining services of a teacher having qualifications of teaching how to drive a vehicle and which teacher is trained and knowledgeable on how to operate technical apparatus and instruments in the vehicle and has the qualifications of teaching how to operate technical apparatus and instruments in the vehicle; and
b. conducting a live one-on-one tutorial with said teacher providing instruction to a student on how to operate at least one instrument of the vehicle with the teacher seated in the vehicle and providing live instruction and tutorial on operating the at least one instrument to the student also seated in a vehicle.

2. The method of teaching how to operate portions of a vehicle in accordance with Claim 1, further comprising:
a. creating an online questionnaire to be completed by the student to learn when the student purchased said vehicle and what apparatus or instruments have created problems for the student on setting up and operating said at least one instrument; and
b. said teacher promptly responding to the student's response to the online questionnaire.

3. The method of teaching how to operate portions of a vehicle in accordance with Claim 1 or 2, further comprising: creating teacher workbooks with lesson plans for each vehicle accessory or instrument for said vehicle.

4. The method of teaching how to operate portions of a vehicle in accordance with Claim 1, 2 or 3, further comprising: creating a student workbook with a questionnaire to review each lesson taught live one-on-one from said teacher to said student to determine if the student learned information on said instrument of said vehicle from the immediately preceding lesson.

5. The method of teaching how to operate portions of a vehicle in accordance with any preceding Claim, further comprising:
a. obtain written consent of the teacher and the student prior to each teaching session for videotaping and audio taping of a lesson; and
b. mount a digital wide angle lens camera at a location within said vehicle or outside said vehicle to obtain the video or audio recording of each live one-on-one teaching session.

6. The method of teaching how to operate portions of a vehicle in accordance with Claim 5, further comprising: said teacher and supervisory personnel review each audio taped session to improve teaching presentation and information provided to the student.

7. The method of teaching how to operate portions of a vehicle in accordance with any preceding Claim, further comprising: continuing the live one-on-one tutorial with said teacher seated in the passenger seat next to the driver's seat and said student seated in the driver's seat, the student operating the same at least one instrument to demonstrate knowledge gained in the operation of the at least one instrument during the tutorial while said teacher observes said student and approves the student's operation of the at least one instrument or corrects mistakes made by the student until the student correctly operates the at least one instrument.

8. The method of teaching how to operate portions of a vehicle in accordance with any preceding Claim, further comprising: the at least one instrument is selected from the group consisting of: driver controls, steering wheel gearshift paddles, combination switching- turn signals; high beams, direct select lever, passenger air bag indicator lamps, display - multimedia system, start/stop button - all four positions, climate control systems, driver safety systems, active distance assist, active speed limit assist, active brake assist, active lane keep assist, active lamp change assist, active blind spot assist, active emergency stop assist, active traffic sign assist, rear view mirror adjustment, side mirror adjustment, operating console instruments, setting clock, open and lock gas tank cover, open and lock trunk, setting gauges for fuel, oil, tire pressure, heating, air conditioning and brakes, driver's seat adjustment for heat, massage, vibration, headrest adjustment, height of seat, tilt of seat and backrest, moving seat closer to steering wheel and farther away from steering wheel, passenger seat adjustment for heat, massage, vibration, headrest adjustment, height of seat, tilt of seat and backrest, rear view mirror adjustment - night vision, smog, bright sunlight, blind spot, parking assistance, backup warning, camera operation while driving, operating automatic lane change, operating automatic slow down in heavy traffic and automatic speed up in light traffic, operating headlight adjustment in darkness, smog, rain and snowstorm.

9. The method of teaching how to operate portions of a vehicle in accordance with any preceding Claim, further comprising: continuing the live one-on-one tutorial with said teacher providing instruction to said student on how to operate said at least one instrument of the vehicle with the teacher seated in the driver's seat of the vehicle and repeatedly providing live instruction and tutorial on operating the at least one instrument to the student seated in the passenger seat adjacent the driver's seat.

10. The method of teaching how to operate portions of a vehicle in accordance with any preceding Claim, further comprising: said teacher is selected from a driving school.

11. The method of teaching how to operate portions of a vehicle in accordance with any preceding Claim, further comprising:
a. creating a legal entity to implement said method of teaching including a teaching supervisor in the legal entity;
b. selecting a vehicle including at least five accessories developed within a five-year period prior to the formation of the legal entity and included in a sales period selected from the group consisting of sales year and within six months after the formation of the legal entity;
c. selecting at least two trial locations where at least one student in each trial location purchased or leased a vehicle within the last five years before step "a";
d. selecting at least one driving school defined as qualified driving school in each trial location employing at least one instructor defined as teacher knowledgeable about setting up and operating each of said at least five accessories in said teaching vehicle;
e. creating a teaching plan with teacher on teaching set-up and operation of said at least five accessories for said teaching vehicle;
f. establishing a business relationship with at least one automobile dealership in at least one of said trial locations with a track record of sales of the teaching vehicle within five years before step "a", and coordinating location radius relative to customers and potential customers of said teaching vehicle who purchased or leased or will purchase or lease said teaching vehicle within at least the last five years before step "a" and was not understanding how to set up and operate said at least five accessories and arranging for at least one teaching session between said student and said teacher; and
g. said teacher educating said student on how to set up and operate said at least five accessories of said teaching vehicle, said teacher using said teaching plan through live one-on-one instruction from the teacher to the student with positioning of both the teacher and the student seated within said teaching vehicle selected from the group consisting of said student in a driver's seat of said teaching vehicle with said teacher in a passenger seat of said teaching vehicle and said teacher in the driver's seat of the teaching vehicle with said student in the passenger seat of said teaching vehicle.

12. The method of teaching how to operate portions of a vehicle in accordance with Claim 11, further comprising:
a. selecting a service mark for said method of teaching, searching for availability of said service mark and filing a service mark application in the European Union;
b. establish website on said method of teaching and apply for copyright registration of the website; and
c. file for URL to match said selected service mark.

13. The method of teaching how to operate portions of a vehicle in accordance with any preceding Claim, further comprising: implementing additional source of action selected from the group consisting of:
a. creating a visual image of the vehicle interior including selected images of a driver seat, a front passenger seat, a steering wheel, a rear view mirror and a control panel and a vehicle exterior including a driver's side mirror, a passenger side mirror, and headlights;
b. creating a visual image of the student in a driver's seat and the teacher in a passenger seat;
c. creating a visual image of the teacher in the a driver's seat and the student in a passenger seat;
d. creating a script and visual aids for teaching operation of passenger seat adjustment including adjustment for heat, massage, vibration, headrest adjustment, height of seat, tilt of seat and backrest, moving the seat closer to the steering wheel and farther away from the steering wheel when the student is in the driver's seat and the teacher is in the passenger seat;
e. creating a script and visual aids for teaching operation of passenger seat adjustment including adjustment for heat, massage, vibration, headrest adjustment, height of seat, tilt of seat and backrest, moving the seat closer to the steering wheel and farther away from the steering wheel when the teacher is in the driver's seat and the student is in the passenger seat;
f. creating a script and visual aids for teaching side mirror adjustment - both driver's side mirror and passenger side mirror when the student is in the driver's seat and the teacher is in the passenger seat;
g. creating a script and visual aids for teaching side mirror adjustment - both driver's side mirror and passenger side mirror when the teacher is in the driver's seat and the student is in the passenger seat;
h. creating a script and visual aids for teaching rear view mirror adjustment - night vision and blind spot - when the student is in the driver's seat and the teacher is in the passenger seat;
I. creating a script and visual aids for teaching rear view mirror adjustment - night vision and blind spot - when the teacher in driver's seat and student in passenger seat;
j. creating a script and visual aids for teaching parking assistance - when the student is in the driver's seat and the teacher is in the passenger seat;
k. creating a script and visual aids for teaching parking assistance - when teacher in driver's seat and student in passenger seat;
l. creating a script and visual aids for teaching backup warning - when the student is in the driver's seat and the teacher is in the passenger seat;
m. creating a script and visual aids for teaching backup warning - when the teacher is in the driver's seat and the student is in the passenger seat;
n. creating a script and visual aids for teaching camera operation while driving - when the student is in the driver's seat and the teacher is in the passenger seat;
o. creating a script and visual aids for teaching camera operation while driving - when the teacher is in the driver's seat and the student is in the passenger seat;
p. creating a script and visual aids for teaching operating automatic lane change - when the student is in the driver's seat and the teacher is in the passenger seat;
q. creating a script and visual aids for teaching operating automatic lane change - when the teacher is in the driver's seat and the student is in the passenger seat'
r. creating a script and visual aids for teaching operating automatic slow down in heavy traffic and automatic speed up in light traffic - when the student is in the driver's seat and the teacher is in the passenger seat;
s. creating a script and visual aids for teaching operating automatic slow down in heavy traffic and automatic speed up in light traffic - when the teacher is in the driver's seat and the student is in the passenger seat;
t. creating a script and visual aids for teaching operating headlight adjustment in darkness rain and snow - when the student is in the driver's seat and the teacher is in the passenger seat -
u. creating a script and visual aids for teaching operating headlight adjustment in darkness, rain and snow - when the teacher is in the driver's seat and the student is in the passenger seat;
v. creating a script and visual aids for teaching operating steering wheel adjustment - forward, backward, different angles from horizontal, horn volume - when the student is in the driver's seat and the teacher is in the passenger seat;
w. creating a script and visual aids for teaching operating steering wheel adjustment - forward, backward, different angles from horizontal, horn volume - when the teacher is in the driver's seat and the student is in the passenger seat;
x. creating a script and visual aids for teaching operating console instruments - setting clock, open and lock gas tank cover, open and lock trunk, setting guages for fuel, oil, tire pressure, heating, air conditioning and brakes when the student is in the driver's seat and the teacher is in the passenger seat;
y. creating a script and visual aids for teaching operating console instruments - setting clock, open and lock gas tank cover, open and lock trunk, setting gauges for fuel, oil, tire pressure, heating, air conditioning and brakes - when the teacher is in the driver's seat and the student is in the passenger seat;
z. creating a script and visual aids for teaching operating gear shift lever - when the student is in the driver's seat and the teacher is in the passenger seat;
aa. creating a script and visual aids for teaching operating gear shift lever - when the teacher is in the driver's seat and the student is in the passenger seat.
